# EUROPEAN PATENT APPLICATION

(11) **EP 4 637 105 A1**
(43) Date of publication of application: **22.10.2025**
(21) Application number: 23909305.7
(22) Date of filing: 05.09.2023
(51) Int. Cl.: H04L 45/745, H04L 101/622

(54) **VIRTUAL PRIVATE LOCAL AREA NETWORK SERVICE (VPLS) MESSAGE FORWARDING METHOD AND APPARATUS**

(30) Priority: 29.12.2022 CN 202211711906
(71) Applicant: ZTE CORPORATION, Shenzhen, Guangdong 518057 (CN)
(72) Inventor: PAN, Tingshan, Shenzhen, Guangdong 518057 (CN)
(74) Representative: Ziebig Hengelhaupt Intellectual Property Attorneys Patentanwaltskanzlei PartGmbB
(86) International application number: PCT/CN2023/117051
(87) International publication number: WO 2024/139367

(57) **Abstract**

The present application discloses a virtual private local area network service (VPLS) message forwarding method and apparatus. The solution comprises: acquiring a target message to be forwarded; when it is determined that the target message is a message that has been subjected to VLAN translation and has been subjected to address learning by means of a MAC engine, and when a CPU acknowledgment identifier corresponding to the target message is a first identifier, sending to a CPU the target message that carries original VLAN information, so that the CPU replaces VLAN information corresponding to the target message in a MAC hardware table with the original VLAN information, and updates the CPU acknowledgment identifier corresponding to the target message to a second identifier, wherein the first identifier is used for indicating that the VLAN information corresponding to the target message in the MAC hardware table is not the original VLAN information; and forwarding the target message by means of the updated MAC hardware table.

## Description

### CROSS-REFERENCE TO RELATED APPLICATIONS

The present application claims priority to the Chinese Patent Application No. 202211711906.5, filed on December 29, 2022, entitled "VIRTUAL PRIVATE LOCAL AREA NETWORK SERVICE (VPLS) MESSAGE FORWARDING METHOD AND APPARATUS", the entire contents of which are incorporated herein by reference.

### TECHNICAL FIELD

The present application relates to the field of communications, and in particular to a virtual private local area network service (VPLS) message forwarding method and apparatus.

### BACKGROUND

In the information exchange routing scenario, the user equipment needs to access the Virtual Private LAN Service (VPLS) after being subjected to Virtual Local Area Network (VLAN) translation. The VPLS message that needs to be forwarded often carries a destination Media Access Control (MAC) address. However, due to execution of VLAN translation in advance, it becomes difficult to determine the VLAN corresponding to the destination MAC address.

In certain scenarios involving VLAN ranges, for MAC addresses where the accurate VLAN cannot be determined, forwarding can be performed through VLAN flooding, but this approach wastes a large amount of switch resources.

How to improve the accuracy of service message forwarding is the technical problem to be addressed in the present application.

### SUMMARY

An objective of the embodiments of the present application is to provide a virtual private local area network service (VPLS) message forwarding method and apparatus to solve the problem of inaccurate service message forwarding.

In a first aspect, there is provided a virtual private local area network service (VPLS) message forwarding method, performed a switching chip, including: acquiring a target message to be forwarded; sending, upon the condition that the target message is determined to be a message that has been subjected to virtual local area network (VLAN) translation and has been subjected to address learning by means of a media access control (MAC) engine and that a CPU acknowledgment identifier corresponding to the target message is a first identifier, to a CPU the target message that carries original VLAN information, so that the CPU replaces VLAN information corresponding to the target message in a MAC hardware table with the original VLAN information, and updates a CPU acknowledgment identifier corresponding to the target message to a second identifier, wherein the first identifier is used for indicating that the VLAN information corresponding to the target message in the MAC hardware table is not the original VLAN information; and forwarding the target message by means of an updated MAC hardware table.

In a second aspect, there is provided a virtual private local area network service (VPLS) message forwarding method, performed by a CPU, including: receiving a target message that carries original VLAN information from a switching chip, wherein the target message is sent from the switching chip to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that the VLAN information corresponding to the target message in a MAC hardware table is not the original VLAN information; and replacing the VLAN information corresponding to the target message in the MAC hardware table with the original VLAN information and updating the CPU acknowledgment identifier corresponding to the target message to a second identifier, wherein the updated MAC hardware table is used for forwarding the target message.

In a third aspect, there is provided a virtual private local area network service (VPLS) message forwarding method, performed by an electronic device, including: by a switching chip, acquiring a target message to be forwarded; and sending the target message that carries original VLAN information to a CPU upon the condition the target message is determined to be a message that has been subjected to VLAN translation and has been subjected to address learning by means of a MAC engine, and that a CPU acknowledgment identifier corresponding to the target message is a first identifier, wherein the first identifier is used for indicating that VLAN information corresponding to the target message in a MAC hardware table is not the original VLAN information; and by the CPU, receiving the target message that carries the original VLAN information from the switching chip; and replacing the VLAN information corresponding to the target message in the MAC hardware table with the original VLAN information and updating the CPU acknowledgment identifier corresponding to the target message to a second identifier, wherein an updated MAC hardware table is used for forwarding the target message.

In a fourth aspect, there is provided a virtual private local area network service (VPLS) message forwarding system, including a switching chip and a CPU; wherein the switching chip is used for acquiring a target message to be forwarded; and sending the target message that carries original VLAN information to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that VLAN information corresponding to the target message in a MAC hardware table is not the original VLAN information; and the CPU is used for receiving the target message that carries the original VLAN information from the switching chip; and replacing the VLAN information corresponding to the target message in the MAC hardware table with the original VLAN information and updating the CPU acknowledgment identifier corresponding to the target message to a second identifier, wherein an updated MAC hardware table is used for forwarding the target message.

In a fifth aspect, there is provided an electronic device including a processor, a memory and a computer program stored on the memory and executable on the processor, which when executed by the processor implements the steps of the method according to the first aspect, the second aspect or the third aspect.

In a sixth aspect, there is provided a computer-readable storage medium, having stored thereon a computer program, wherein the computer program, when executed by a processor, implements the steps of the method according to the first aspect, the second aspect or the third aspect.

### BRIEF DESCRIPTION OF DRAWING(S)

The accompanying drawings described herein are intended to provide a further understanding of the present application and constitute a part of the present application, and the schematic embodiments of the present application and the description thereof are intended to explain the present application, and do not constitute an undue limitation of the present application. In the drawings:
FIG. 1 is a first flow diagram of a VPLS message forwarding method applied to a switching chip according to an embodiment of the present application.
FIG. 2 is a second flow diagram of a VPLS message forwarding method applied to a switching chip according to an embodiment of the present application.
FIG. 3 is a third flow diagram of a VPLS message forwarding method applied to a switching chip according to an embodiment of the present application.
FIG. 4 is a fourth flow diagram of a VPLS message forwarding method applied to a switching chip according to an embodiment of the present application.
FIG. 5 is a fifth flow diagram of a VPLS message forwarding method applied to a switching chip according to an embodiment of the present application.
FIG. 6 is a sixth flow diagram of a VPLS message forwarding method applied to a switching chip according to an embodiment of the present application.
FIG. 7 is a seventh flow diagram of a VPLS message forwarding method applied to a switching chip according to an embodiment of the present application.
FIG. 8 is an eighth flow diagram of a VPLS message forwarding method applied to a switching chip according to an embodiment of the present application.
FIG. 9 is a flow diagram of a VPLS message forwarding method applied to a CPU according to an embodiment of the present application.
FIG. 10a is a flow diagram of a VPLS message forwarding method applied to an electronic device according to an embodiment of the disclosure.
FIG. 10b is a structural diagram of a switch for performing the VPLS message forwarding method.
FIG. 10c is flow diagram of message MAC forwarding executed by a switching chip based on FIG. 10b.
FIG. 11 is a structural diagram of a VPLS message forwarding system according to an embodiment of the present disclosure.
FIG. 12 is a structural diagram of a VPLS message forwarding apparatus applied to a switching chip according to an embodiment of the present disclosure.
FIG. 13 is a structural diagram of a VPLS message forwarding apparatus applied to a CPU according to an embodiment of the present disclosure.

### DETAILED DESCRIPTION

The technical solutions in the embodiments of the present application will be clearly and completely described below in conjunction with the accompanying drawings in the embodiments of the present application, and it is obvious that the described embodiments are a part of the embodiments of the present application, rather than all of the embodiments. Based on the embodiments in the present application, all other embodiments obtained by those of ordinary skill in the art without making inventive labor, belong to the scope of protection of the present application. The reference numerals in the present application are only used to distinguish the various steps in the solution, and are not used to limit the order in which the various steps are performed, which is to be described in the specification.

In traditional network deployment scenarios, switches can distinguish between different users based on information such as QinQ (802.1Q-in-802.1Q) tags and OLT (Optical Line Terminal) ports. QinQ is also known as Stacked VLAN (Virtual Local Area Network) or Double VLAN. In new metropolitan area network deployment scenarios, the VLANs of OLTs in the Leaf network may overlap. Due to the loss of the aforementioned OLT information in vBRAS (Virtual Broadband Remote Access Server) scenarios, in order to ensure the normal functioning of precise user binding, it is necessary to differentiate between different users on a "per QinQ per user" basis, which means implementing the VLAN translation function.

Based on this scenario, in the uplink direction, the AC (Access Controller) supports the mapping of the VLAN table in a VLAN Range or VLAN list scenario. That is, for each outer single-layer VLAN or VLAN range, the outer VLAN is stripped, an SVLAN (Service VLAN, used in service provider networks) is added, and different translation entries are generated based on different source ACs..

In the downlink direction, the outer VLAN for the service can be re-formed based on the learned MAC address and outer VLAN information.

The above described networking has the following problems.
1. In a certain scenario, some switching chips perform MAC learning based on VFI (Virtual Forwarding Instance) + MAC. The learned interfaces are virtual ports. Through these virtual ports, the translated VLAN can be identified, but it is impossible to determine the specific corresponding VLAN within the pre-translation VLAN range. In unicast scenarios, the only option is to replicate all VLANs within the VLAN range. This approach consumes a large amount of bandwidth, constrains the service scale, and leads to resource waste.
2. In another scenario, in the user side, the VLAN range is split into multiple individual VLANs through software means to achieve translation of the split VLANs to the source VLAN. Then, the source VLAN is used to access the VPLS. Although this approach enables MAC forwarding, it consumes a large amount of VLAN translation tables and Layer 3 interface table resources. In extreme cases, it may require 4K * 4K = 16 million entries, resulting in severe waste of hardware resources.

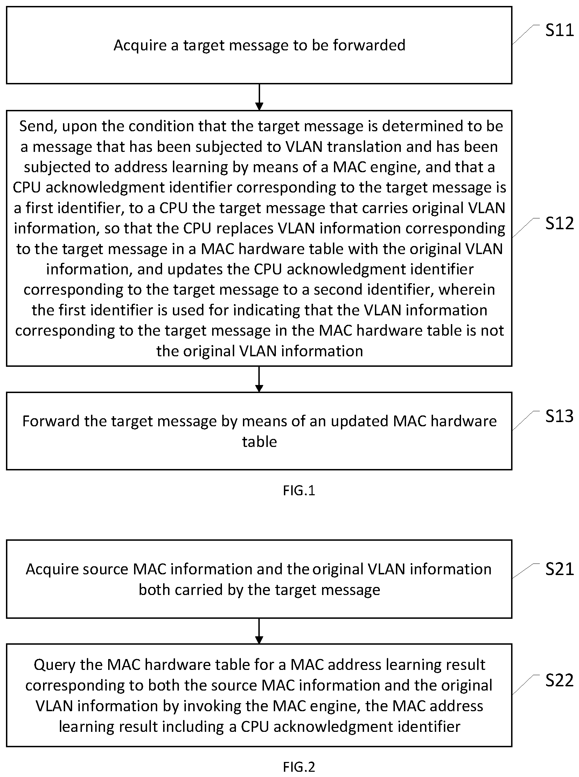

In order to solve the problems existing in the prior art, an embodiment of the present application provides a virtual private local area network service (VPLS) message forwarding method, as shown in FIG. 1, which can be applied to a switching chip, and the switching chip can be arranged in a switch-router product. The method includes the following steps S11, S12 and S13.

At S11: a target message to be forwarded is acquired.

The target message may be a VPLS message which is sent by the user side and carries original VLAN information.

At S12: upon the condition that that the target message is determined to be a message that has been subjected to VLAN translation and has been subjected to address learning by means of a MAC engine, and that a CPU (Central Processing Unit) acknowledgment identifier corresponding to the target message is a first identifier, the target message that carries original VLAN information is sent to a CPU, so that the CPU replaces VLAN information corresponding to the target message in a MAC hardware table with the original VLAN information, and updates the CPU acknowledgment identifier corresponding to the target message to a second identifier, wherein the first identifier is used for indicating that the VLAN information corresponding to the target message in the MAC hardware table is not the original VLAN information.

During message forwarding, the message often needs to be subjected to VLAN translation and MAC address learning, and information such as the translated VLAN, and the virtual interface used for forwarding is stored in the MAC hardware table. In the MAC hardware table, multiple pieces of corresponding information are stored in the form of entries. For instance, one entry in the MAC hardware table may record relevant VPLS information, source MAC information, and VLAN information. The stored information may be utilized to facilitate the forwarding of VPLS messages. These corresponding pieces of information may be generated when a user requests access to the VPLS and may be modified during the course of the service.

In this step, whether the target message has been subjected to VLAN translation and has been subjected to address learning by means of a MAC engine may be determined by querying the MAC hardware table.

In an embodiment of the present application, the MAC hardware table stores a CPU acknowledgment identifier. The CPU acknowledgment identifier may be either a first identifier or a second identifier. The first identifier is used for indicating that the VLAN information corresponding to the target message in the MAC hardware table is not the original VLAN information, while the second identifier is used for indicating that the VLAN information corresponding to the target message in the MAC hardware table is the original VLAN information.

In this step, when the CPU acknowledgment identifier is the first identifier, the target message that carries the original VLAN information is sent to the CPU. The CPU then replaces the VLAN information corresponding to the target message in the MAC hardware table with the original VLAN information and updates the first identifier to the second identifier. Through this step, the MAC hardware table can store the original VLAN information corresponding to the target message, and the original VLAN information can be used for message forwarding.

At S13: the target message is forwarded by means of an updated MAC hardware table.

After update, the MAC hardware table stores the original VLAN information. During the forwarding of the VPLS message, the corresponding entry in the MAC hardware table may be queried based on the information carried in the message to be forwarded, so as to determine the original VLAN information of the receiving end of the target message for message forwarding, thereby achieving precise message forwarding.

Through the solution provided in the embodiment of the present application, when performing message forwarding, the content corresponding to the target message in the MAC hardware table is updated to ensure that the VLAN information stored in the MAC hardware table is the original VLAN information carried in the target message. In scenarios involving VLAN translation and MAC learning for messages, the solution provided in the embodiment of the present application enables the MAC hardware table to store the original VLAN information before VLAN translation. The CPU acknowledgment identifier is used for indicating whether the VLAN information stored in the MAC hardware table is the original VLAN information, and the CPU acknowledgment identifier can be used to determine whether to update the MAC hardware table in an efficient way. During message forwarding, the VLAN, to which the target message is forwarded, within the VLAN range can be determined by means of the MAC hardware table, flooding the VLAN range is not needed, which reduces resource consumption and improves the message forwarding efficiency.

Based on the solution provided by the above embodiment, optionally, after the above step S11, as shown in FIG. 2, the method further includes steps S21 and S22.

At S21: source MAC information and the original VLAN information both carried in the target message are acquired.

In this step, the target message to be forwarded can be parsed to acquire the source MAC information and original VLAN information carried in the target message. The source MAC information may include the MAC address information of the sender of the target message, and the original VLAN information may include the VLAN address information of the sender of the target message.

At S22: the MAC hardware table is queried for a MAC address learning result corresponding to both the source MAC information and the original VLAN information by invoking the MAC engine, the MAC address learning result including the CPU acknowledgment identifier.

In this step, the switching chip invokes the MAC engine to perform a query in the MAC hardware table. The source MAC information and the original VLAN information parsed from the target message are used in the query. If corresponding information is found in the MAC hardware table, it indicates that the target message has been subjected to address learning by means of the MAC engine, i.e., the MAC address learning result is stored in the MAC hardware table. Conversely, if no corresponding information is found in the MAC hardware table, it indicates that the target message has not been subjected to address learning by means of the MAC engine.

The MAC hardware table may pre-store multiple MAC address learning results that have been subjected to VLAN translation and MAC address learning. Each MAC address learning result may include information such as the source MAC information, the virtual interface, the VLAN information, and the CPU acknowledgment identifier. Wherein, the CPU acknowledgment identifier is used for indicating whether the VLAN information in the entry is the original VLAN information carried in the message. For instance, in the MAC hardware table, the CPU acknowledgment identifier can use "0" to represent a first identifier and "1" to represent a second identifier.

Through the solution provided in the present application embodiment, the MAC hardware table is queried to determine the MAC address learning result corresponding to the target message. The query result may indicate whether the target message is a message that has been subjected to VLAN translation, and has been subjected to address learning by means of the MAC engine. If a corresponding MAC address learning result is found, it may be further determined whether an update to the VLAN information in the MAC address learning result needs to be performed according to the CPU acknowledgment identifier corresponding to the queried target message. This solution enables efficient and accurate querying of the MAC address learning result corresponding to the target message, thereby efficiently determining whether to proceed with the subsequent step of updating the original VLAN information.

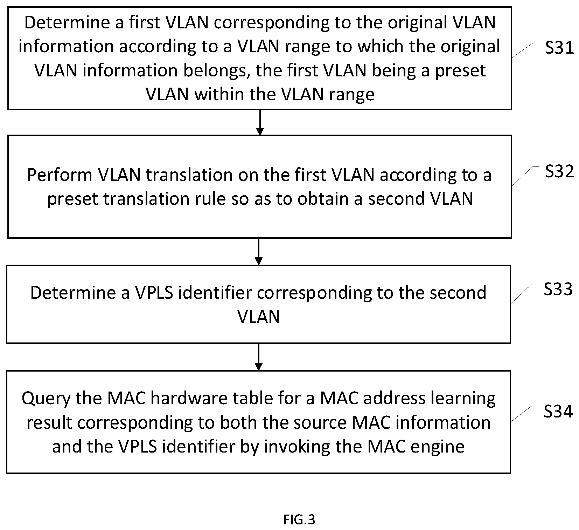

Based on the solution provided by the above embodiment, optionally, as shown in FIG. 3, the above step S22 includes steps S31 to S34.

At S31: a first VLAN corresponding to the original VLAN information is determined according to a VLAN range to which the original VLAN information belongs, the first VLAN being a preset VLAN within the VLAN range.

In the step of querying the MAC address learning result corresponding to the target message, VLAN translation is performed on the target message. In particular, the VLAN range to which the original VLAN information carried in the target message belongs is first determined. In practical applications, a plurality of VLAN ranges can be preset in the switching chip, and a plurality of VLANs belonging to the same VLAN range may share resources to conserve performance.

For example, it is assumed that the original VLAN information obtained by parsing the target message is 20, and one preset VLAN range is 10-100. Since 20 falls within the range of 10-100, it may be determined that 10-100 is the VLAN range to which the original VLAN information belongs. Then, a preset VLAN within this VLAN range is determined as the first VLAN corresponding to the original VLAN information. Wherein, the preset VLAN may be, for example, the minimum value, the maximum value, or another preset value within the VLAN range. For example, when the preset VLAN is the minimum value, it may be determined that the minimum value within the VLAN range 10-100 is the first VLAN, that is, 10 is determined to be the first VLAN.

At S32: VLAN translation is performed on the first VLAN according to a preset translation rule, so as to obtain a second VLAN.

In this step, VLAN translation is performed according to the preset translation rule. For example, if the translation rule is "10-1000", translation is performed on the first VLAN in this instance, and the resulting second VLAN is 1000.

At S33: a VPLS identifier corresponding to the second VLAN is determined.

The VPLS identifier may be, for example, a Virtual Forwarding Instance (VFI). In this step, a sub-interface query may be performed to determine the VFI corresponding to the second VLAN. In particular, firstly, the corresponding virtual interface (which is the sub-interface) may be queried based on the second VLAN, and then the corresponding VFI for the queried virtual interface is determined, thereby obtaining the VPLS identifier corresponding to the second VLAN.

At S34: the MAC hardware table is queried for a MAC address learning result corresponding to both the source MAC information and the VPLS identifier by invoking the MAC engine.

In this step, the corresponding MAC address learning result of the target message is queried. A query is performed in the MAC hardware table using the source MAC information and the VFI, and the queried entry is the MAC address learning result corresponding to the target message.

Through the solution provided by the embodiment of the present application, VLAN translation is performed based on the original VLAN information carried in the target message. Subsequently, the MAC hardware table is queried using the combination of "source MAC information + VPLS identifier", enabling accurate and efficient querying of the MAC address learning result corresponding to the target message, and further determining whether to update the VLAN information within the MAC address learning result corresponding to the target message in subsequent steps.

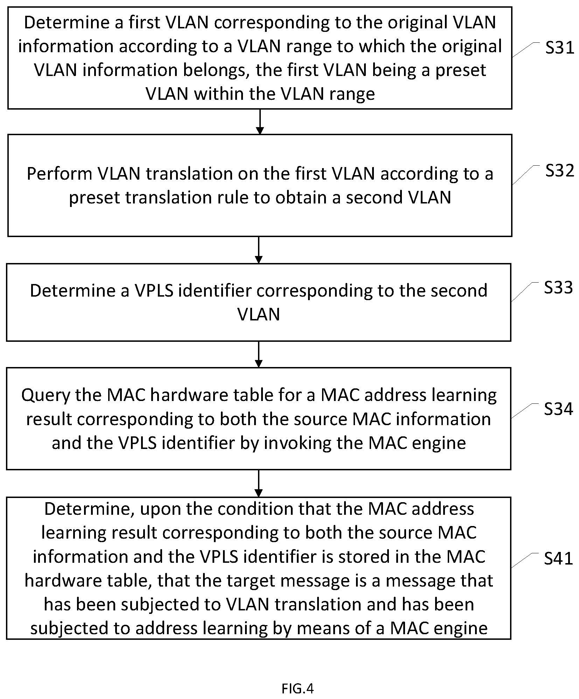

Based on the solution provided by the above embodiment, optionally, as shown in FIG. 4, after S34, the method further includes step S41.

At S41: upon the condition that the MAC address learning result corresponding to both the source MAC information and the VPLS identifier is stored in the MAC hardware table, the target message is determined to be a message that has been subjected to VLAN translation and has been subjected to address learning by means of a MAC engine.

In this step, it is determined whether the target message is a message that has been subjected to VLAN translation and has been subjected to address learning by means of a MAC engine based on the query result from the above step.

In some cases, if the MAC address learning result corresponding to the source MAC information and the VPLS identifier is not found in the MAC hardware table, it indicates that the MAC address learning result corresponding to the target message is not stored in the MAC hardware table, i.e., the target message has not been subjected to address learning by means of the MAC engine.

If the MAC address learning result corresponding to the source MAC information and the VPLS identifier is found in the MAC hardware table, it indicates that the target message has been subjected to address learning by means of the MAC engine, and the MAC address learning result is stored in the MAC hardware table.

Further, with respect to the queried MAC address learning result, whether the MAC address learning result needs to be updated may be determined according to a CPU acknowledgment identifier stored therein. Specifically, if the CPU acknowledgment identifier in the MAC address learning result is the second identifier, it indicates that the VLAN information in the MAC address learning result is not the original VLAN information carried in the target message, an update needs to be performed. If the CPU acknowledgment identifier in the MAC address learning result is the first identifier, it indicates that the original VLAN information is already stored in the MAC address learning result, no update needs to be performed.

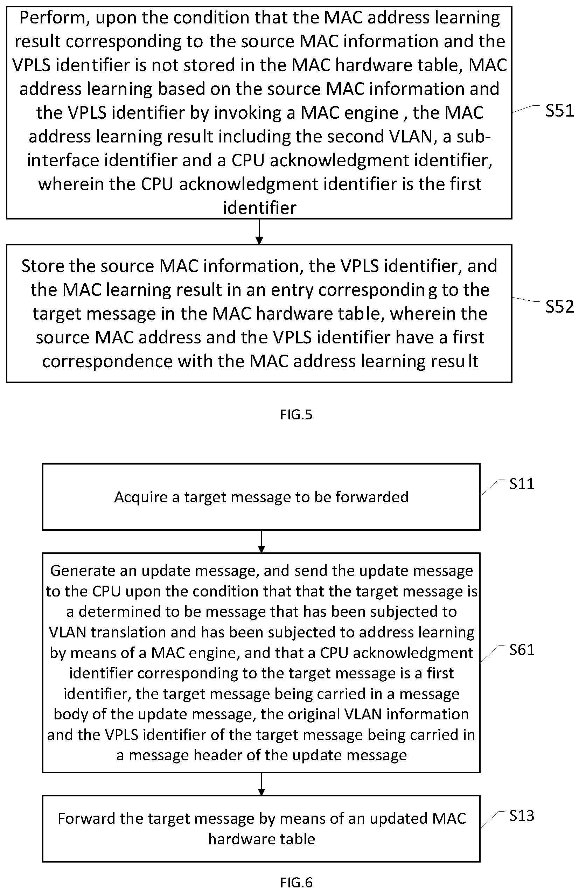

Based on the solution provided by the above embodiment, optionally, as shown in FIG. 5, after S34, the method further includes steps S51 and S52.

At S51: upon the condition that the MAC address learning result corresponding to both the source MAC information and the VPLS identifier is not stored in the MAC hardware table, MAC address learning is performed based on the source MAC information and the VPLS identifier by invoking a MAC engine, the MAC address learning result including the second VLAN, a sub-interface identifier and a CPU acknowledgment identifier, wherein the CPU acknowledgment identifier is the first identifier.

In the solution provided by the embodiment of the present application, if the MAC hardware table does not store a MAC address learning result corresponding to the source MAC information and the VPLS identifier, it indicates that the target message has not been subjected to address learning. In this scenario, the MAC engine is invoked to perform MAC address learning, wherein the MAC address learning result includes the second VLAN, the sub-interface identifier, and the CPU acknowledgment identifier. In some cases, the CPU acknowledgment identifier is set as the first identifier to indicate that the VLAN stored in this MAC address learning result is not the original VLAN of the target message. The VLAN information stored in the MAC address learning result has been subjected to VLAN translation.

At S52: the source MAC information, the VPLS identifier, and the MAC learning result are stored in an entry corresponding to the target message in the MAC hardware table, wherein the source MAC address and the VPLS identifier have a first correspondence with the MAC address learning result.

In this step, the MAC address learning result is stored in the MAC hardware table, for example, it may be stored in the format of "source MAC address + VPLS identifier → MAC address learning result" to establish the first correspondence within the MAC hardware table. For example, the stored entry could be "smac 10000 + VFI1 → vlan 20 virtual interface 1 CPU acknowledgment identifier 0".

By the solution provided by the embodiment of the present application, MAC address learning can be performed on a target message that has not been subjected to MAC address learning, and the MAC address learning result is stored in the MAC hardware table. When a subsequent query is performed on the target message, the corresponding entry can be queried in the MAC hardware table to facilitate updating the MAC hardware table in subsequent steps, so as to update the original VLAN information into the MAC hardware table.

Further, after storing the MAC address learning result in the MAC hardware table, the target message may be further sent to the CPU to instruct the CPU to update the MAC address learning result according to the original VLAN information carried in the target message, so that the original VLAN information is stored in the MAC hardware table and the CPU acknowledgment identifier is updated to the second identifier.

Based on the solution provided by the above embodiment, optionally, as shown in FIG. 6, the step that the target message that carries the original VLAN information is sent to the CPU includes the step S61.

At S61: an update message is generated, and the update message sent to the CPU, the target message is carried in a message body of the update message, and the original VLAN information and the VPLS identifier of the target message are carried in a message header of the update message.

In this instance, the update message is generated and sent to the CPU to instruct the CPU to perform an update. The generated update message includes at least two parts: a message header and a message body. The target message may be carried in the message body, the original VLAN information and VPLS identifier may be carried in the message header, and additionally an identifier instructing the CPU to perform an update may be carried.

After receiving the update message, the CPU parses the message header to learn that the update message is used to update the MAC address learning result corresponding to the target message, and then queries the MAC hardware table based on the original VLAN information and the VPLS identifier of the target message, thereby updating the VLAN information in the entry corresponding to the target message to the original VLAN information.

Through the solution provided by the embodiment of the present application, the update message is generated to enable the CPU to enhance the update efficiency of the MAC address learning result corresponding to the target message. The CPU can quickly obtain the original VLAN information by parsing the message header and then promptly execute the update on the corresponding entry.

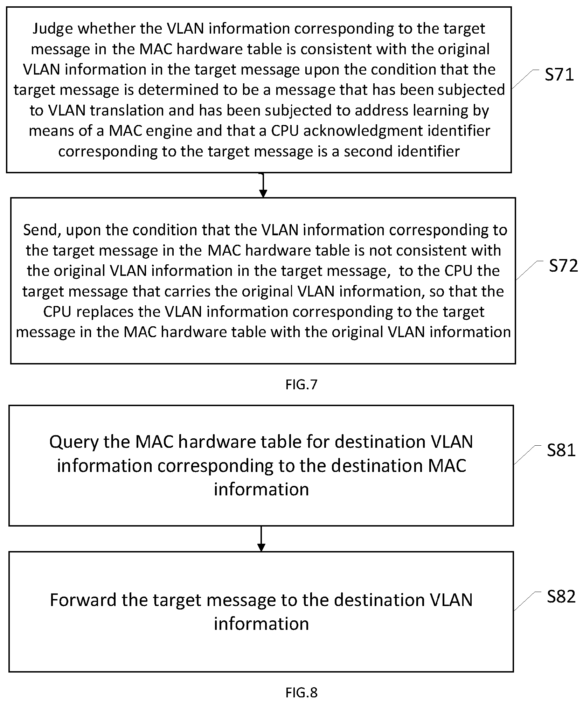

Based on the solution provided by the above embodiment, optionally, as shown in FIG. 7, after the above step S11, the method further includes steps S71 and S72.

At S71: upon the condition that the target message is determined to be a message that has been subjected to VLAN translation and has been subjected to address learning by means of a MAC engine and that a CPU acknowledgment identifier corresponding to the target message is a second identifier, whether the VLAN information corresponding to the target message in the MAC hardware table is consistent with the original VLAN information in the target message is judged.

In this step, if the CPU acknowledgment identifier corresponding to the target message is queried and found to be the second identifier, it indicates that the MAC address learning result corresponding to the target message in the MAC hardware table has already been updated. However, in certain scenarios, VLAN flapping may occur, causing change of the correspondence between the VLAN information stored in the MAC hardware table and the target message. Wherein, MAC flapping, also known as MAC address flapping, refers to a phenomenon where two ports within the VLAN of a device learn the same MAC address, and the subsequently learned MAC address entry overwrites the original one. MAC flapping may lead to a mismatch between the MAC address and VLAN of the entries stored in the MAC hardware table, resulting in flapping between sub-interfaces.

In practical applications, if VLAN flapping occurs, the original VLAN information carried in the target message would change. In this step, when it is determined that the acknowledgment identifier corresponding to the target message is the second identifier, whether the VLAN information stored in the MAC hardware table is consistent with the original VLAN information carried in the target message is further judged. If YES, it indicates that no VLAN flapping has occurred, and the VLAN information in the MAC address learning result corresponding to the target message stored in the MAC hardware table can be used to accurately forward the message.

At S72: upon the condition that the VLAN information corresponding to the target message in the MAC hardware table is not consistent with the original VLAN information in the target message, the target message that carries the original VLAN information is sent to the CPU, so that the CPU replaces the VLAN information corresponding to the target message in the MAC hardware table with the original VLAN information.

If the VLAN information corresponding to the target message in the MAC hardware table is not consistent with the original VLAN information in the target message, it indicates that VLAN flapping has occurred such that the originally stored VLAN information in the MAC hardware table can no longer be used to implement message forwarding. In this case, the target message that carries the original VLAN information is sent to the CPU to perform the update of the VLAN information.

In some cases, an update message may be generated and sent to the CPU based on step S61 described above to implement the update of the VLAN information. In this instance, the original VLAN information sent to the CPU is the VLAN information after VLAN flapping has occurred.

The following description is made with reference to instances. It is assumed that the original VLAN information carried in the target message is VLAN10, then, the microcode in the switching chip may be used to first perform a VLAN range operation. For example, the forwarding information of the VLAN is changed to the minimum value within the VLAN range, which is VLAN2. Next, VLAN2 is used for VLAN translation, resulting in VLAN3 after translation. Then, VLAN3 is used for sub-interface access to the VPLS. Subsequently, the message sub-interface is used to index into the VFI information. The microcode is used to send the VFI, along with the source MAC information, sub-interface information, and VLAN3 of the message, to the MAC engine, so as to invoke the MAC engine to query the corresponding entry in the MAC hardware table. The found entry might be, for example, "VFI + SMAC → sub-interface information + VLAN1 + CPU acknowledgment identifier 1".

Subsequently, the microcode judges that VLAN1 in the entry is not consistent with VLAN10 carried in the message, and may determine that the MAC has flapped between different VLANs. An update needs to be performed on this entry at this point to ensure that the source MAC information corresponds to the original VLAN information.

In some cases, by means of microcode, the original message is mirrored to the CPU, and the VFI and original VLAN information are carried in an upload header to instruct the CPU to perform MAC learning and update entries in the MAC hardware table. the aforementioned entry "VFI + SMAC → sub-interface information + VLAN1 + CPU acknowledgment identifier 1" is updated to "VFI + SMAC → sub-interface information + VLAN10 + CPU acknowledgment identifier 1", which ensures that the original MAC information corresponds to VLAN10, and enables accurate message forwarding.

Through the solution provided by the embodiments of the present application, maintenance of the MAC hardware table can be implemented, so as to guarantee that the MAC address learning result stored in the MAC hardware table can be used to implement message accurate forwarding. In scenarios where VLAN flapping occurs, the VLAN information stored in the MAC hardware table can be updated to VLAN information after flapping by the solution provided by the embodiments of the present application, so that accurate forwarding of messages can be achieved based on the VLAN information stored in the MAC hardware table after VLAN flapping.

Based on the solution provided by the above embodiment, optionally, as shown in FIG. 8, the target message carries destination MAC information.

In some cases, the destination MAC information may include a destination MAC address for target message forwarding.

The above step S13 includes the steps S81 and S82.

At S81: the MAC hardware table is queried for destination VLAN information corresponding to the destination MAC information.

In this step, the destination VLAN information for forwarding the target message is determined by querying the MAC hardware table. For example, based on the methods described in any one of the aforementioned embodiments, the corresponding VPLS identifier can be first determined according to the target message. Then, a query is executed in the MAC hardware table using the combination of "destination MAC address + VPLS identifier". The VLAN information in the queried entry is used as the destination VLAN information.

At S82: the target message is forwarded to the destination VLAN information.

By the solution provided by the embodiment of the present application, a query is performed in a MAC hardware table in which a MAC address learning result is pre-stored based on a target message, so that corresponding destination VLAN information is queried according to destination MAC information. Since the original VLAN information of the message is stored in the MAC hardware table by means of VLAN translation, MAC address learning, and storage of the CPU acknowledgment identifier, etc., the destination VLAN information used to forward of the target message can be queried from the MAC hardware table, so that the target message can be forwarded precisely.

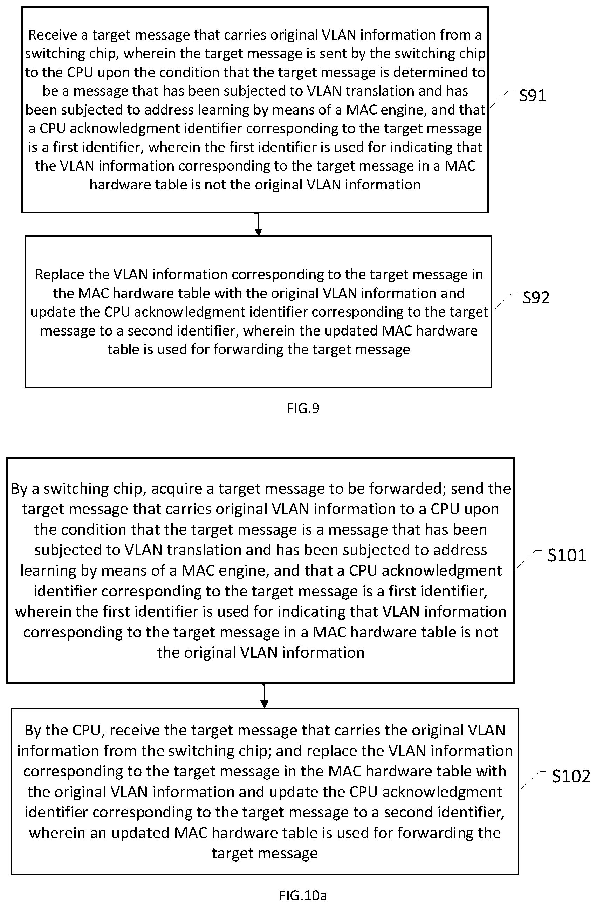

In order to solve the problems existing in the prior art, an embodiment of the present application further provides a virtual private local area network service (VPLS) message forwarding method, as shown in FIG. 9, applied to a CPU, including steps S91 and S92.

At S91: a target message that carries original VLAN information from a switching chip is received, wherein the target message is from the switching chip to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that the VLAN information corresponding to the target message in a MAC hardware table is not the original VLAN information.

At S92: the VLAN information corresponding to the target message in the MAC hardware table is replaced with the original VLAN information, and the CPU acknowledgment identifier corresponding to the target message is updated to a second identifier, wherein the updated MAC hardware table is used for forwarding the target message.

After the CPU receives the target message, the MAC engine is invoked to perform MAC address learning to update the corresponding entry in the MAC hardware table, so that the target message corresponds to the original VLAN information, and the original VLAN information is accurately provided when the message forwarding is subsequently performed, thus ensuring accurate and efficient forwarding.

Through the solution provided by the embodiments of the present application, the CPU updates the corresponding entries in the MAC hardware table based on the received target message, ensuring that the original VLAN information correctly corresponding to the target message is stored. During the process of message forwarding, the accurate forwarding address can be determined by querying the MAC hardware table, thus enabling accurate forwarding. Moreover, during the forwarding process, there is no need to perform VLAN flooding, which avoids wasting switch resources and reduces the resource consumption of the switch.

In order to solve the problems existing in the prior art, an embodiment of the present application further provides a virtual private local area network service (VPLS) message forwarding method, as shown in FIG. 10a, applied to an electronic device, the method including steps S101 and S102.

At S101: a switching chip acquires a target message to be forwarded; and sends the target message that carries original VLAN information is sent to a CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that VLAN information corresponding to the target message in a MAC hardware table is not the original VLAN information.

At S102: the CPU receives the target message that carries the original VLAN information from the switching chip; and replaces the VLAN information corresponding to the target message in the MAC hardware table with the original VLAN information, and updates the CPU acknowledgment identifier corresponding to the target message to a second identifier, wherein an updated MAC hardware table is used for forwarding the target message.

In a scenario where the VLAN range-based VPLS is accessed after VLAN translation, when a Provider Edge (PE) device operates in an uplink mode, the VLAN range accesses the VPLS after being subjected to VLAN translation. Subsequent to MAC learning and MAC query, a message is either forwarded directly from the local device or forwarded to other remote PE devices through channels and pseudo wires. However, the switching chip cannot identify which specific VLAN within the VLAN range the learned mac originates from. This results in an inability to obtain the accurate VLAN when the downlink traffic looks up this mac, thereby preventing accurate forwarding. Although some devices can resolve this issue by performing VLAN flooding for all VLANs within the VLAN range, this approach wastes a large amount of port bandwidth resources and also reduces the scalability and ease of use of the service deployment.

In an embodiment of the present application, the solution is described based on a switching chip, a MAC engine, a Central Processing Unit (CPU) and microcode of a switch, wherein the microcode is instructions in the switching chip, and the microcode instructions may be used to implement processing of messages. The MAC engine is used to perform hardware learning and the CPU is used to write the VLAN into the hardware table of the MAC.

Through the solution provided in this instance, the VPLS can be accessed after VLAN translation in the VLAN range, achieving precise MAC learning and forwarding., enhancing network flexibility of switch-router products, improving the maintainability of network equipment, and elevating network using experience.

During the process of MAC learning performed by the MAC engine, the MAC engine can learn that the forwarding information from a MAC address to a sub-interface is VLAN subjected to translation. The microcode confirms whether the message to be forwarded has been subjected to VLAN range processing and VLAN translation by performing table queries. If the message has been subjected to the aforementioned processing, the CPU makes confirmation during the MAC learning process.

The MAC engine may query the MAC hardware table for the CPU acknowledgment identifier (i.e., the CPU acknowledgment identifier) corresponding to the to-be-forwarded message. If this CPU acknowledgment identifier is 0, it indicates that record in the MAC hardware table does not contain the original VLAN information.

Subsequently, the message may be originally mirrored to the CPU, and the instance number VFI of the VPLS and the original VLAN information of the message may be added in the message header to update the original VLAN in the MAC hardware table. In addition, an identifier of MAC learning may be carried in the header to inform the CPU that the message is used to update the MAC engine.

After receiving the aforementioned message, the CPU performs an update of the MAC learning result based on the identifier of the MAC learning in the message header. In some cases, the VFI may be parsed from the message header and the SMAC may be parsed from the mirrored original message. Then, MAC learning is performed based on the VFI and SMAC, and the learning result is updated to the original VLAN information carried in the header. This ensures that the updated MAC hardware table records the corresponding among the VFI, the SMAC, and the original VLAN information. Additionally, after update of this entry, the corresponding CPU acknowledgment identifier of the entry is updated to 1, indicating that the entry records the original VLAN information. When subsequent message forwarding is performed, the corresponding entry may be queried based on the MAC hardware table, and according to the CPU acknowledgment identifier associated with the entry, it is determined that the entry records the original VLAN information. Consequently, the message is forwarded precisely based on the original VLAN information.

Through the solution provided in the embodiments of the present application, MAC address learning is performed for messages that are accessed into VPLS after being subjected to the VLAN range operation and subsequent VLAN translation. Hardware learning is performed through the MAC engine on the switching chip, where the microcode queries the MAC address learning result corresponding to the target message to determine whether an update of VLAN information is necessary. When the microcode determines that there is a difference between the learned result and the original VLAN information of the original message, software MAC flapping may be employed to ensure accurate correspondence between the MAC information in the MAC address learning result and the original VLAN information. By adopting this approach, flooding within the VLAN range can be avoided, thereby preventing resource waste and facilitating more flexible deployment of relevant services.

The solution provided by the embodiments of the present application may be performed by an IPRAN (IP Radio Access Network) access device for example. Through the solution provided in the embodiments of the present application, two drawbacks arising during VPLS service access after VLAN translation within the VLAN range may be overcome. On one hand, the need for known unicast flooding in the VLAN range is eliminated. On the other hand, the requirement for splitting the VLAN range into sub-interfaces is avoided. Consequently, this approach not only avoids consuming a large amount of hardware resources but also enables precise forwarding. In the solution proposed by the embodiments of the present application, microcode can be involved, with the CPU only needing to process the first message. The entire process of MAC address learning and flapping can be efficiently accomplished.

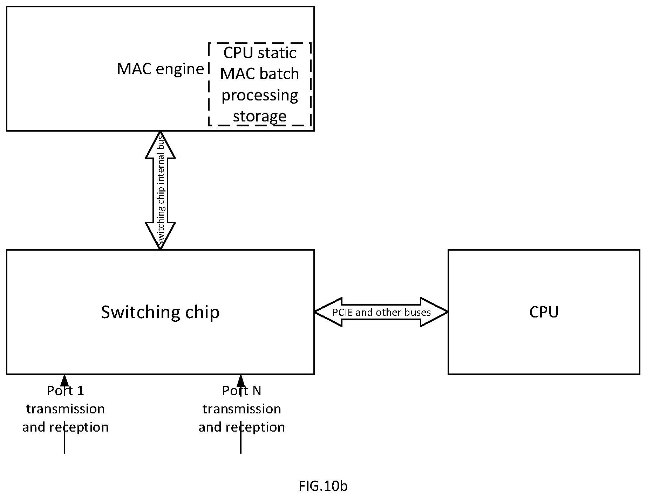

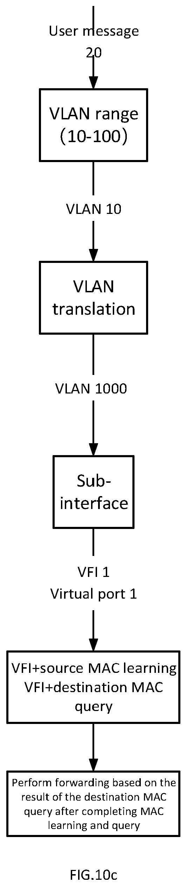

FIG. 10b provides a schematic diagram of the structure of a switch that may be used to perform steps of any one of the solutions provided by the above embodiments of the present application. The switch includes a switching chip, a MAC engine and a CPU, and the switching chip is in communication connection with the MAC engine and the CPU. The microcode may operate on the switching chip to control forwarding of chip hardware. FIG. 10c is a flow diagram of message MAC forwarding executed based on a switching chip of FIG. 10b.

In one application scenario, MAC learning is implemented as follows: VLAN translation is performed in the VLAN range to access the VPLS. It is assumed that the original VLAN information of the message is 20, the source MAC is 10000, the destination MAC is 20000, the VLAN range is pre-configured to be 10-100, VLAN translation is 10 → 1000, the VLAN 1000 corresponds to a virtual interface of 1, and the VFI is 1. Wherein, the destination MAC 20000 is the MAC learned by a virtual interface 2 from a pw (Pseudo Wire) side. Then, the MAC learning and forwarding flow of the message is as follows.
1. Since VLAN 20 of the message falls within the VLAN range of 10-100, the internally forwarded VLAN 10 is output . This step may be processed by the microcode of the switching chip.
2. VLAN 10 is translated into VLAN 1000 by means of VLAN translation, and the translation result, i.e., VLAN 1000 is forwarded. This step may be processed by the microcode of the switching chip.
3. A sub-interface is queried according to VLAN 1000, the acquired virtual interface of the message is 1, and VFI is 1. This step may be processed by the microcode of the switching chip.
4. The microcode first initiates source MAC learning for the MAC engine based on VFI 1 + SMAC 10000. The MAC learning result includes the VLAN 1000and the virtual interface 1, and a CPU acknowledgment identifier is set to 0 by default. Subsequently, the microcode retrieves the learning result from the engine and identifies that the message is accessed within the VLAN range, and the CPU acknowledgment identifier remains 0, indicating that an update of the original VLAN information is needed. Based on this, the microcode mirrors the message to the CPU, the message header carries the VFI and original VLAN 20 information of the message. Simultaneously, an upload header carries an upload reason to instruct the CPU to perform MAC learning. This step may be processed by the microcode of the switching chip.
5. The microcode triggers the engine to initiate a destination MAC query according to the destination MAC, and the query is initiated based on VFI 1 + DMAC 20000, associated to the virtual interface 2. The message is subsequently encapsulated with the virtual interface 2 and forwarded to the CPU. This step may be processed by the microcode of the switching chip.
6. The CPU receives the upload information of the switching chip, learns that MAC learning needs to be performed based on the upload reason, and then rewrites the corresponding entry of the MAC hardware table based on VFI1 + smac 10000 → vlan 20,virtual interface 1, CPU acknowledgment identifier 1. Since the CPU acknowledgment identifier is 1, subsequent chip messages would not be mirrored the CPU again. This step may be processed by the CPU.

In another scenario where MAC flapping occurs, a message with the original VLAN information of 30, the source MAC of 10000, and the destination MAC of 20000 enters from other ports, the process flow for MAC flapping is as follows.
1. Since the original VLAN information 30 of the message falls within the VLAN range of 10-100, the internally forwarded VLAN 10 is output. This step may be processed by the microcode of the switching chip.
2. VLAN 10 is translated into VLAN 1000 by means of VLAN translation, and the translation result, i.e., VLAN 1000 is forwarded. This step may be processed by the microcode of the switching chip.
3. A sub-interface is queried according to VLAN 1000, the acquired virtual interface of the message is 1, and VFI is 1. This step may be processed by the microcode of the switching chip.
4. The microcode initiates a source MAC query for the MAC engine based on VFI 1 + SMAC 10000. The query result includes VLAN 20 and the virtual interface 1, and the CPU acknowledgment identifier is set to 1. Upon the condition that the microcode determines that the MAC hardware table is consistent with the VFI+SMAC in the message, but the VLAN 20 in the MAC hardware table is not consistent with the original VLAN information 30 in the message, indicating occurrence of MAC flapping. In this case, the microcode mirrors the message to the CPU, and carries the VFI and the original VLAN information 30 in the upload header, along with an upload reason to instruct the CPU to perform MAC learning. This step may be processed by the microcode of the switching chip.
5. Upon receiving the upload information from the switching chip, the CPU performs MAC learning based on the upload reason. the corresponding entry in the hardware MAC table is rewritten based on VFI1 + SMAC 10000 → VLAN 30, virtual interface 1, and CPU acknowledgment identifier 1, ensuring that the SMAC corresponds to the original VLAN information. Consequently, subsequent message forwarding by the chip does not require mirroring to the CPU again. This step is processed by the CPU.

Through the solution provided by the embodiments of the present application, by merely utilizing microcode and the CPU to assist the MAC engine in executing corresponding processing for message learning scenarios and MAC flapping scenarios, excessive resource consumption can be avoided. This approach enhances the network deployment flexibility of switch and router products, improves the maintainability of network devices, and ultimately enhances users' network usage experience.

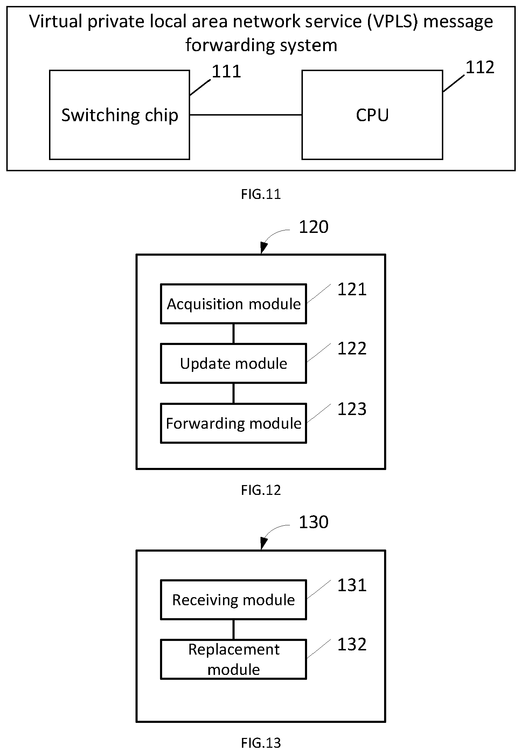

In order to solve the problems existing in the prior art, an embodiment of the present application further provides a virtual private local area network service (VPLS) message forwarding system, as shown in FIG. 11, including a switching chip 111 and a CPU 112; the switching chip 111 is used for acquiring a target message to be forwarded; and sending the target message that carries original VLAN information to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that VLAN information corresponding to the target message in a MAC hardware table is not the original VLAN information.

The CPU 112 is used for receiving the target message that carries the original VLAN information from the switching chip; and replacing the VLAN information corresponding to the target message in the MAC hardware table with the original VLAN information and updating the CPU acknowledgment identifier corresponding to the target message to a second identifier, wherein an updated MAC hardware table is used for forwarding the target message.

By adopting the solution proposed in the present application, the accuracy of service message forwarding can be improved, and the switch resources consumed for message forwarding can be reduced. For the CPU acknowledgment identifier obtained by querying the MAC hardware table, if the identifier indicates that the stored information is not the original VLAN information, the table is updated so that the MAC hardware table contains the original VLAN information after the update. Consequently, when performing VPLS message forwarding, the VLAN information required for forwarding can be obtained by querying the MAC hardware table, enabling accurate message forwarding. Through this solution, there is no need to replicate the entire VLAN range, effectively reducing switch resource consumption and achieving precise message forwarding.

The aforementioned modules within the system provided by the embodiments of the present application can also implement the method steps in the method embodiments mentioned above. Alternatively, the system provided by the embodiments of the present application may include additional modules beyond those mentioned above, which are designed to implement the method steps provided in the aforementioned method embodiments. Moreover, the apparatus provided by the embodiments of this application is capable of achieving the same technical effects as those attainable by the method embodiments.

To address the problems in the prior art, the embodiments of the present application also provide a VPLS message forwarding apparatus 120, as illustrated in FIG. 12, which is applicable to a switching chip. The apparatus includes: an acquisition module 121, configured to acquire a target message to be forwarded; an update module 122, configured to sending, upon the condition that the target message is determined to be a message that has been subjected to virtual local area network (VLAN) translation and has been subjected to address learning by means of a media access control (MAC) engine and that a CPU acknowledgment identifier corresponding to the target message is a first identifier, to a CPU the target message that carries original VLAN information, so that the CPU replaces VLAN information corresponding to the target message in a MAC hardware table with the original VLAN information, and updates a CPU acknowledgment identifier corresponding to the target message to a second identifier, wherein the first identifier is used for indicating that the VLAN information corresponding to the target message in the MAC hardware table is not the original VLAN information; and a forwarding module 123, configured to forward the target message by means of an updated MAC hardware table.

Wherein, the aforementioned modules within the apparatus provided by the embodiments of the present application can also implement the method steps in the method embodiments mentioned above. Alternatively, the apparatus provided by the embodiments of the present application may include additional modules beyond those mentioned above, which are designed to implement the method steps provided in the aforementioned method embodiments. Moreover, the apparatus provided by the embodiments of the present application is capable of achieving the same technical effects as those attainable by the method embodiments.

To solve the problems in the prior art, an embodiment of the present application further provides a virtual private local area network service (VPLS) message forwarding apparatus 130, applied to the CPU, including: a receiving module 131, configured to receive a target message that carries original VLAN information from a switching chip, wherein the target message is sent from the switching chip to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that the VLAN information corresponding to the target message in a MAC hardware table is not the original VLAN information; a replacement module 132, configured to replace the VLAN information corresponding to the target message in the MAC hardware table with the original VLAN information and update the CPU acknowledgment identifier corresponding to the target message to a second identifier, wherein the updated MAC hardware table is used for forwarding the target message.

The aforementioned modules within the apparatus provided by the embodiments of the present application can also implement the method steps in the method embodiments mentioned above. Alternatively, the apparatus provided by the embodiments of the present application may include additional modules beyond those described, which are designed to execute the method steps provided in the aforementioned method embodiments. Furthermore, the apparatus provided by the embodiments of the present application is capable of achieving the same technical effects as those attainable by the method embodiments.

Preferably, an embodiment of the present application further provides an electronic device, includes a processor, a memory, and a computer program stored on the memory and executable on the processor, the computer program when executed by the processor implements the respective processes of the embodiment of the virtual private local area network service (VPLS) message forwarding method described above, and achieves the same technical effects, which will not be repeated here in order to avoid repetition.

An embodiment of the present application further provides a computer readable storage medium, the computer-readable storage medium has stored thereon a computer program which, when executed by a processor, implements the respective processes of the embodiment of the virtual private local area network service (VPLS) message forwarding method described above, and achieves the same technical effects, which will not be repeated here in order to avoid repetition. Wherein, the computer-readable storage medium is a Read-Only Memory (ROM), a Random Access Memory (RAM), a magnetic disk, or an optical disk.

It will be appreciated by those skilled in the art that embodiments of the present application may be provided as methods, systems, or computer program products. Accordingly, the present application may take the form of an entirely hardware embodiment, an entirely software embodiment, or an embodiment combining software and hardware aspects. Moreover, the present application may take the form of a computer program product implemented on one or more computer-usable storage media (including, but not limited to, magnetic disk storage, CD-ROM, optical memory, etc.) containing computer-usable program code therein.

The present application is described with reference to flowcharts and/or block diagrams of methods, apparatus (systems), and computer program products according to embodiments of the present application. It should be understood that each flow and/or block in the flowchart and/or block diagrams, as well as combinations of the flowchart and/or block diagrams, may be implemented by computer program instructions. These computer program instructions may be provided to a processor of a general purpose computer, a special purpose computer, an embedded processor, or other programmable data processing apparatus to produce a machine such that the instructions executed by the processor of the computer or other programmable data processing apparatus produce means for implementing the functions specified in one or more flows of the flowchart diagrams and/or one or more blocks of the block diagrams.

These computer program instructions may also be stored in a computer-readable memory capable of directing a computer or other programmable data processing apparatus to operate in a particular manner such that the instructions stored in the computer-readable memory produce an article of manufacture including instruction means for implementing the functions specified in a flow or processes of the flowcharts and/or a block or blocks of the block diagrams.

These computer program instructions may also be loaded onto a computer or other programmable data processing apparatus such that a series of operational steps are performed on the computer or other programmable apparatus to produce a computer-implemented process, such that the instructions executed on the computer or other programmable apparatus provide steps for implementing the functions specified in one flow or more flows of the flowcharts and/or one block or more blocks of the block diagrams.

In one typical configuration, a computing device includes one or more processors (CPU), input/output interfaces, network interfaces, and a memory.

The memory may include forms of a non-permanent memory, a random access memory (RAM), and/or a non-volatile memory in computer-readable media such as read-only memory (ROM) or flash memory (flash RAM). The memory is an example of a computer-readable medium.

The computer-readable media, including permanent and non-permanent, removable and non-removable media, may be stored by any method or technique to enable information storage. The information may be computer-readable instructions, data structures, modules of programs, or other data. Examples of storage media for a computer include, but are not limited to, Parameter Random Access Memory (PRAM), Static Random Access Memory (SRAM), Dynamic Random Access Memory (DRAM), other types of random access memory (RAM), Read Only Memory (ROM), Electrically Erasable Programmable Read Only Memory (EEPROM), flash memory or other memory technology, Compact Disc-Read Only Memory (CD-ROM), Digital Video Disc (DVD) or other optical storage, magnetic cassettes, magnetic tape, magnetic disk storage or other magnetic storage devices, or any other non-transmission medium that can be used to store information that can be accessed by a computing device. As defined herein, computer-readable media does not include transitory computer-readable media, such as modulated data signals and carrier waves.

It should also be noted that the terms "comprising", "comprise" or any other variation thereof are intended to encompass a non-exclusive inclusion such that a process, method, commodity, or apparatus including a series of elements includes not only those elements, but also other elements not explicitly listed, or elements inherent to such a process, method, commodity, or apparatus. Without further limitation, an element defined by the statement "comprising a" does not preclude the presence of additional identical elements in a process, method, article, or apparatus including the element.

It will be appreciated by those skilled in the art that embodiments of the present application may be provided as methods, systems, or computer program products. Accordingly, the present application may take the form of an entirely hardware embodiment, an entirely software embodiment, or an embodiment combining software and hardware aspects. Moreover, the present application may take the form of a computer program product implemented on one or more computer-usable storage media (including, but not limited to, magnetic disk storage, CD-ROM, optical memory, etc.) containing computer-usable program code therein.

The above description is only an example of the present application, and is not intended to limit the present application. Various modifications and variations of the present application will be apparent to those skilled in the art. Any modification, equivalent substitution, improvement, etc. made within the spirit and principle of the present application should be included within the scope of the claims of the present application.

## Claims

1. A virtual private local area network service (VPLS) message forwarding method, performed by a switching chip, comprising:
acquiring a target message to be forwarded;
sending, upon the condition that the target message is determined to be a message that has been subjected to virtual local area network (VLAN) translation and has been subjected to address learning by means of a media access control (MAC) engine and that a CPU acknowledgment identifier corresponding to the target message is a first identifier, to a CPU the target message that carries original VLAN information, so that the CPU replaces VLAN information corresponding to the target message in a MAC hardware table with the original VLAN information, and updates a CPU acknowledgment identifier corresponding to the target message to a second identifier, wherein the first identifier is used for indicating that the VLAN information corresponding to the target message in the MAC hardware table is not the original VLAN information; and
forwarding the target message by means of an updated MAC hardware table.

2. The method according to claim 1, wherein after acquiring the target message to be forwarded, the method further comprises:
acquiring source MAC information and the original VLAN information both carried in the target message; and
querying the MAC hardware table for a MAC address learning result corresponding to both the source MAC information and the original VLAN information by invoking the MAC engine, the MAC address learning result comprising a CPU acknowledgment identifier.

3. The method according to claim 2, wherein querying the MAC hardware table for the MAC address learning result corresponding to both the source MAC information and the original VLAN information by invoking the MAC engine comprises:
determining, according to a VLAN range to which the original VLAN information belongs, a first VLAN corresponding to the original VLAN information, the first VLAN being a preset VLAN within the VLAN range;
performing VLAN translation on the first VLAN according to a preset translation rule, so as to obtain a second VLAN;
determining a VPLS identifier corresponding to the second VLAN; and
querying the MAC hardware table for a MAC address learning result corresponding to both the source MAC information and the VPLS identifier by invoking the MAC engine.

4. The method according to claim 3, wherein after querying the MAC hardware table for the MAC address learning result corresponding to both the source MAC information and the VPLS identifier by invoking the MAC engine, the method further comprises:
determining, upon the condition that the MAC address learning result corresponding to both the source MAC information and the VPLS identifier is stored in the MAC hardware table, that the target message is a message that has been subjected to VLAN translation and has been subjected to address learning by means of a MAC engine.

5. The method according to claim 3, wherein after querying the MAC hardware table for the MAC address learning result corresponding to both the source MAC information and the VPLS identifier by invoking the MAC engine, the method further comprises:
performing, upon the condition that the MAC address learning result corresponding to both the source MAC information and the VPLS identifier is not stored in the MAC hardware table, MAC address learning based on the source MAC information and the VPLS identifier by invoking a MAC engine, the MAC address learning result comprising the second VLAN, a sub-interface identifier and a CPU acknowledgment identifier, wherein the CPU acknowledgment identifier is the first identifier; and
storing the source MAC information, the VPLS identifier, and the MAC learning result in an entry corresponding to the target message in the MAC hardware table, wherein the source MAC address and the VPLS identifier have a first correspondence with the MAC address learning result.

6. The method according to claim 3, wherein sending to the CPU the target message that carries the original VLAN information comprises:
generating an update message, and sending the update message to the CPU, the target message being carried in a message body of the update message, and the original VLAN information and the VPLS identifier of the target message being carried in a message header of the update message.

7. The method according to any one of claims 1-6, wherein after acquiring the target message to be forwarded, the method further comprises:
judging, upon the condition that the target message is determined to be a message that has been subjected to VLAN translation and has been subjected to address learning by means of a MAC engine, and that the CPU acknowledgment identifier corresponding to the target message is the second identifier, whether the VLAN information corresponding to the target message in the MAC hardware table is consistent with the original VLAN information in the target message; and
sending, upon the condition that the VLAN information corresponding to the target message in the MAC hardware table is not consistent with the original VLAN information in the target message, to the CPU the target message that carries the original VLAN information, so that the CPU replaces the VLAN information corresponding to the target message in the MAC hardware table with the original VLAN information.

8. The method according to claim 1, wherein the target message carries destination MAC information;
wherein forwarding the target message by means of the updated MAC hardware table comprises:
querying the MAC hardware table for destination VLAN information corresponding to the destination MAC information; and
forwarding the target message according to the destination VLAN information.

9. A virtual private local area network service (VPLS) message forwarding method, performed by a CPU, comprising:
receiving a target message that carries original VLAN information from a switching chip, wherein the target message is sent from the switching chip to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that the VLAN information corresponding to the target message in a MAC hardware table is not the original VLAN information; and
replacing the VLAN information corresponding to the target message in the MAC hardware table with the original VLAN information, and updating the CPU acknowledgment identifier corresponding to the target message to a second identifier, wherein the updated MAC hardware table is used for forwarding the target message.

10. A virtual private local area network service (VPLS) message forwarding method, performed by an electronic device, comprising:
by a switching chip, acquiring a target message to be forwarded; and sending the target message that carries original VLAN information to a CPU upon the condition the target message is determined to be a message that has been subjected to VLAN translation and has been subjected to address learning by means of a MAC engine, and that a CPU acknowledgment identifier corresponding to the target message is a first identifier, wherein the first identifier is used for indicating that VLAN information corresponding to the target message in a MAC hardware table is not the original VLAN information; and
by the CPU, receiving the target message that carries the original VLAN information from the switching chip; and replacing the VLAN information corresponding to the target message in the MAC hardware table with the original VLAN information, and updating the CPU acknowledgment identifier corresponding to the target message to a second identifier, wherein an updated MAC hardware table is used for forwarding the target message.

11. A virtual private local area network service (VPLS) message forwarding system, comprising a switching chip and a CPU; wherein
the switching chip is used for acquiring a target message to be forwarded; and sending the target message that carries original VLAN information to the CPU upon the condition that the target message is determined to be a message that has been subjected to VLAN translation and has been subjected to address learning by means of a MAC engine, and that a CPU acknowledgment identifier corresponding to the target message is a first identifier, wherein the first identifier is used for indicating that VLAN information corresponding to the target message in a MAC hardware table is not the original VLAN information; and
the CPU is used for receiving the target message that carries the original VLAN information from the switching chip; and replacing the VLAN information corresponding to the target message in the MAC hardware table with the original VLAN information and updating the CPU acknowledgment identifier corresponding to the target message to a second identifier, wherein an updated MAC hardware table is used for forwarding the target message.

12. An electronic device, comprising a memory, a processor and a computer program stored on the memory and executable on the processor, the computer program when executed by the processor implementing the steps of the method according to any one of claims 1 to 10.

13. A computer-readable storage medium, having stored thereon a computer program, wherein the computer program, when executed by a processor, implements the steps of the method according to any one of claims 1 to 10.
